# EUROPÄISCHE PATENTANMELDUNG

(11) **EP 0 841 379 A1**
(43) Veröffentlichungstag der Anmeldung: **13.05.1998**
(21) Anmeldenummer: 97118998.0
(22) Anmeldetag: 31.10.1997
(51) Int. Cl.: C09D 5/02, C09D 133/06, C09D 167/08, C08J 7/04

(54) **Aerosolbeschichtungszusammensetzung sowie ihre Verwendung zur Beschichtung von Kunststoffsubstraten**

(30) Priorität: 12.11.1996 DE 19646610
(71) Anmelder: BASF Coatings AG, 48165 Münster (DE)
(72) Erfinder: Oslowski, Hans-Josef, Dr., 48163 Münster (DE); Reiter, Udo, Dr., 48291 Telgte (DE); Weber, Dieter, 51491 Overath (DE)
(74) Vertreter: Hüsener, Susanne, Dr.

(57) **Zusammenfassung**

Gegenstand der vorliegenden Erfindung ist eine Aerosolbeschichtungszusammensetzung, die mindestens ein filmbildendes Polymer, organisches Lösemittel, mindestens ein Treibmittel, ggf. Pigmente und/oder Füllstoffe, ggf. Modifizierungsmittel sowie ggf. übliche Hilfs- und Zusatzstoffe enthält, dadurch gekennzeichnet, daß sie ein oder mehrere chlorierte Polyolefine, bevorzugt Polyolefine mit einem Chlorgehalt von 10 bis 45 Gew.-%, bezogen auf den Festkörper der chlorierten Polyolefine, und bevorzugt mit einem zahlenmittleren Molekulargewicht von 7.000 bis 200.000 enthält.

Die vorliegende Erfindung betrifft außerdem ein Verfahren zur Herstellung dieser Aerosolbeschichtungszusammensetzung sowie deren Verwendung zur Beschichtung von Kunststoffsubstraten.

## Beschreibung

Gegenstand der vorliegenden Erfindung ist eine Aerosolbeschichtungszusammensetzung, die mindestens ein filmbildendes Polymer, organisches Lösemittel, mindestens ein Treibmittel, ggf. Pigmente und/oder Füllstoffe, ggf. Modifizierungsmittel sowie ggf. übliche Hilfs- und Zusatzstoffe enthält.

Die vorliegende Erfindung betrifft außerdem ein Verfahren zur Herstellung dieser Aerosolbeschichtungszusammensetzung sowie deren Verwendung zur Beschichtung von Kunststoffsubstraten.

In der Industrie werden heute zunehmend Formteile auf Kunststoffbasis verwendet, die zusammen mit Metallteilen eingesetzt werden und die einer Lackierung bedürfen. Dies gilt insbesondere für Kraftfahrzeugteile, die in zunehmendem Maße aus Kunststoffteilen gefertigt werden, wie beispielsweise Stoßfängerverkleidungen, Spoiler, Schweller, Radhausverkleidungen und seitliche Verkleidungen bzw. Schutzleisten. Für derartige Formteile werden in zunehmendem Maße Kunststoffe aus Polypropylen und Polypropylenblends, bevorzugt mit einem Polypropylengehalt von mehr als 50 Gew.-%, bezogen auf den Kunststoffanteil, eingesetzt. Solche Teile werden derzeit in Uni-Kontrastfarbtönen, in Uni-Karosseriefarbtönen, in Effekt-Karosseriefarbtönen sowie in Effekt-Kontrastfarbtönen beschichtet.

Ist nun eine Reparaturlackierung der beschichteten Metallteile erforderlich, so stehen dem Pkw-Besitzer hierfür die entsprechenden Lacke in Form von Aerosolbeschichtungszusammensetzungen zur Verfügung, die oft auch als Sprühdosenlacke bezeichnet werden. Diese Aerosolbeschichtungszusammensetzungen ermöglichen die einfache und problemlose Reparatur insbesondere kleinerer Lackschäden.

Im Falle der beschichteten Kunststoffteile bestehen jedoch bei der Formulierung entsprechender Aerosolbeschichtungszusammensetzungen viele Probleme. Beispielsweise sind diese Kunststoffe sehr widerstandsfähig gegen Lösemittel, so daß Anlösung oder Anquellung als Verbundhilfe ausscheidet. Ferner müssen die Inhaltsstoffe von Aerosolbeschichtungszusammensetzungen mit den verwendeten Treibgasen verträglich sein, um die für derartige Beschichtungszusammensetzungen geforderte Lagerstabilität von mindestens 6 Monaten zu erreichen.

Schließlich ist es bisher nicht möglich gewesen, Aerosolbeschichtungszusammensetzungen zur Beschichtung von Polypropylen- oder Polypropylenblend-Oberflächen einzusetzen, ohne die Polypropylen- bzw. Polypropylenblend-Oberfläche vorher mit einer Grundierung zu versehen. Als Grundierung werden dabei beispielsweise Systeme eingesetzt, die chlorierte Polyolefine enthalten. Die Verwendung derartiger Grundierungen hat aber den Nachteil, daß die Applikation einer Grundierung einen zusätzlichen Verfahrensschritt erfordert und somit zusätzliche Kosten verursacht.

Aus der EP-B-455 211 ist nun ein Effekt-Basislack zur direkten Beschichtung von aus Polypropylen bestehenden oder Polypropylen enthaltenden, nichtgrundierten Kunststoffsubstraten bekannt. Dieser dort beschriebene Effekt-Basislack enthält neben physikalisch trocknenden Bindemitteln Celluloseacetobutyrat und 0,5 bis 15 Gew.-% eines oder mehrerer chlorierter Polyolefine. Aerosolbeschichtungszusammensetzungen sind in der EP-B-455 211 nicht beschrieben. Außerdem unterscheiden sich die dort beschriebenen Effekt-Baislacke von Aerosolbeschichtungszusammensetzungen noch dadurch, daß nur nach Überlackierung mit einem Klarlack und/oder einer Wärmetrocknung eine dauerhafte und nicht klebende Oberfläche erhalten wird.

Der vorliegenden Erfindung liegt daher die Aufgabe zugrunde, Aerosolbeschichtungszusammensetzungen zur Verfügung zu stellen, die insbesondere für die Beschichtung von Kunststoffsubstraten geeignet sind. Ferner sollten die Aerosolbeschichtungszusammensetzungen die üblicherweise an diese Lacke gestellten Anforderungen erfüllen. Sie sollten daher beispielsweise sehr gute Trocknungseigenschaften, eine sehr gute Applizierbarkeit aus der Sprühdose sowie eine sehr gute Verarbeitbarkeit zeigen. Sie sollten daher beispielsweise auch fein versprühbar sein und eine gute Standfestigkeit, gute Kantenabdeckung des Untergrundes, einen guten Verlauf und keine Bildung von Schaumblasen zeigen. Darüber hinaus sollten sie zu gleichmäßigen Beschichtungen mit einem guten Korrosionsschutz und einer guten Haftung führen. Dabei sollte die gute Haftung auch auf nicht vorbehandelten Polypropylen-Oberflächen und auf nicht vorbehandelten Polypropylenblend-Oberflächen gewährleistet sein. Diese Aerosolbeschichtungszusammensetzungen sollten schließlich eine gute Verträglichkeit mit den in Aerosolbeschichtungszusammensetzungen üblicherweise eingesetzten Treibmitteln und somit eine gute Lagerstabilität nach Abfüllung in der Sprühdose (Lagerstabilität von mindestens 6 Monaten bei Lagerung bei 50 °C bzw. von mindestens 12 Monaten bei Lagerung bei Raumtemperatur) aufweisen.

Diese Aufgabe wird überraschenderweise durch Aerosolbeschichtungszusammensetzungen der eingangs genannten Art gelöst, die dadurch gekennzeichnet sind, daß sie ein oder mehrere chlorierte Polyolefine, bevorzugt Polyolefine mit einem Chlorgehalt von 10 bis 45 Gew.-%, bezogen auf den Festkörper der chlorierten Polyolefine, enthalten.

Die vorliegende Erfindung betrifft außerdem ein Verfahren zur Herstellung dieser Aerosolbeschichtungszusammensetzungen sowie deren Verwendung zur Beschichtung von Kunststoffsubstraten, insbesondere von polypropylenhaltigen Kunststoffsubstraten.

Durch den Einsatz der chlorierten Polyolefine in den Aerosolbeschichtungszusammensetzungen wird eine überraschend deutliche Haftungsverbesserung der Beschichtungen auf Polypropylen und Polypropylenblends erzielt. Zusätzlich ist es überraschend und war nicht vorhersehbar, daß die Aerosolbeschichtungszusammensetzungen trotz Zusatz von chlorierten Polyolefinen die üblicherweise an derartige Lacke gestellten Anforderungen erfüllen, da der Zusatz von chlorierten Polyolefinen zu Beschichtungszusammensetzungen nämlich üblicherweise zur Verschlechterung der Eigenschaften, wie beispielsweise Lagerstabilität der Beschichtungszusammensetzungen, Glanzabfall, Verschlechterung des Metalleffekts u.ä. führt.

Schließlich weisen die erfindungsgemäßen Aerosolbeschichtungszusammensetzungen den Vorteil einer guten Haftung der resultierenden Beschichtung auf. Dabei ist insbesondere die gute Haftung auch auf nicht vorbehandelten Polypropylen-Oberflächen und auf nicht vorbehandelten Polypropylenblend-Oberflächen von großer Bedeutung, und zwar sowohl bei der Lackierung nicht vorbehandelter Rohteile als auch bei der sogenannten Spotreparatur, bei der das zu lackierende Kunststoffteil bis auf den freien Kunststoff durchgeschliffen wird.

Im folgenden werden nun zunächst die einzelnen Bestandteile der erfindungsgemäßen Aerosolbeschichtungszusammensetzungen näher erläutert.

Es ist erfindungswesentlich, daß die Aerosolbeschichtungszusammensetzungen ein oder mehrere chlorierte Polyolefine, bevorzugt Polyolefine mit einem Chlorgehalt von 10 bis 45 Gew.-%, besonders bevorzugt von 10 bis 25 Gew.-%, ganz besonders bevorzugt von 15 bis 20 Gew.-%, jeweils bezogen auf den Festkörper der chlorierten Polyolefine, enthalten. Bevorzugt weisen die eingesetzten Polyolefine eine zahlenmittleres Molekulargewicht von 7.000 bis 200.000, besonders bevorzugt von 8.000 bis 50.000, auf.

Die Menge an eingesetzten chlorierten Polyolefinen kann je nach Aerosolbeschichtungszusammensetzung variieren. Bevorzugt werden die chlorierten Polyolefine aber in einer Menge von 0,05 bis 15 Gew.-%, besonders bevorzugt von 0,1 bis 10 Gew.-% und ganz besonders bevorzugt von 0,2 bis 5,0 Gew.-%, jeweils bezogen auf das Gesamtgewicht der Aerosolbeschichtungszusammensetzung (einschließlich Treibmittel) und auf den Festkörper der chlorierten Polyolefine, eingesetzt.

Die erfindungsgemäß eingesetzten chlorierten Polyolefine sind dem Fachmann geläufig und im Handel beispielsweise unter den Handelsnamen Eastman ® chlorierte Polyolefine CP-343-1, CP-153-2, CP-515-2 und CP-343-3 der Firma Eastman Chemical Products, INC., Trapylen 810 und 822 der Firma Tramaco und Hardlen 14 LLBx, 14LWP und 13MLJ der Firma Toyo Kasei erhältlich.

Bevorzugt werden die unter den Handelsnamen Eastman ® chlorierte Polyolefine CP-343-1, CP-153-2, CP-515-2 und CP-343-3 erhältlichen Produkte und besonders bevorzugt das unter dem Handelsnamen Eastman ® chlorierte Polyolefine CP-343-1 erhältliche Produkt der Firma Eastman Chemical Products, INC. eingesetzt.

Als Bindemittel können die erfindungsgemäßen Aerosolbeschichtungsmittel alle üblicherweise eingesetzten Bindemittel enthalten. Bevorzugt werden als Bindemittel lufttrocknende Bindemittel, besonders bevorzugt auf Basis von Acrylatharzen und/oder Alkydharzen, eingesetzt.

In den erfindungsgemäßen Aerosolbeschichtungsmitteln werden bevorzugt thermoplastische, lufttrocknende Acrylatharze eingesetzt. Diese Acrylatharze weisen üblicherweise ein zahlenmittleres Molekulargewicht von 10.000 bis 500.000, bevorzugt von 50.000 bis 200.000 auf. Besonders bevorzugt werden in den erfindungsgemäßen Aerosolbeschichtungsmitteln Acrylatharze eingesetzt, die beim Torsionsschwingungsversuch nach DIN 53445 eine Temperatur T_{^max} von 60 bis 90 °C, bevorzugt von 69 bis 82 °C, aufweisen. Die Temperatur T_{^max} ist dabei die Temperatur im Torsionsschwingungsversuch nach DIN 53445, bei der das logarithmische Dekrement der Torsionsschwingungsdämpfung ein Maximum durchläuft.

Bevorzugt werden in den erfindungsgemäßen Aerosolbeschichtungsmitteln thermoplastische Acrylatharze eingesetzt, die erhältlich sind durch Polymerisation von
a1) bis zu 100 Gew.-% eines oder mehrerer Alkylester der Acryl- und/oder Methacrylsäure mit 1 bis 20 C-Atomen im Alkylrest,
a2) 0 bis 60 Gew.-% eines oder mehrerer vinylaromatischer Kohlenwasserstoffe und
a3) 0 bis 50 Gew.-% eines oder mehrerer, von den Komponenten (a1) und (a2) verschiedener, ethylenisch ungesättigter Monomerer,
wobei die Summe der Gewichtsanteile der Komponenten (a1) bis (a3) jeweils 100 Gew.-% beträgt.

Als Komponente (a1) werden Alkylester der Acryl- und/oder Methacrylsäure mit 1 bis 20 C-Atomen im Alkylrest eingesetzt, wobei sowohl die Ester von Verzweigten als auch von geradkettigen Alkoholen zum Einsatz kommen. Als Beispiele für geeignete Verbindungen seien Methyl(meth)acrylat, Ethyl(meth)acrylat, Propyl(meth)acrylat, iso-Propyl(meth)acrylat, Butyl(meth)acrylat, iso-Butyl(meth)acrylat, t-Butyl(meth)acrylat, n-Pentyl(meth)acrylat, iso-Pentyl(meth)acrylat, Hexyl(meth)acrylat, n-Octyl(meth)acrylat, 2-Ethylhexyl(meth)acrylat, Decyl(meth)acrylat und Dodecyl(meth)acrylat genannt. Besonders bevorzugt werden als Komponente (a1) Methylmethacrylat, Methylacrylat, Ethylmethacrylat, n-Butylacrylat und/oder n-Butylmethacrylat und ganz besonders bevorzugt Butylmethacrylat und/oder Methylmethacrylat eingesetzt.

Als Beispiele für als Komponente (a2) geeignete vinylaromatische Verbindungen seien Styrol, α-Alkylstyrole, wie α-Methylstyrol, und Vinyltoluol genannt. Bevorzugt wird Styrol eingesetzt.

Als Komponente (a3) werden von den Komponenten (a1) und (a2) verschiedene, ethylenisch ungesättigte Monomere eingesetzt. Als Beispiele für geeignete Verbindungen seien Alkylester anderer ethylenisch ungesättigter Mono- und Dicarbonsäuren, wie z.B. Alkylester der Fumarsäure, Maleinsäure, Itaconsäure, Citraconsäure oder Mesaconsäure, Vinylether und Vinylester, wie z.B. Vinylester der Versaticsäure, u.ä. genannt.

Ferner sind als als Komponente (a3) auch ethylenisch ungesättigte Carbonsäuren und/oder Carbonsäureanhydride und/oder Halbester von ethylenisch ungesättigten Dicarbonsäuren, wie z.B. Acrylsäure, Methacrylsäure, Maleinsäure, Itaconsäure, oder Mono(meth)acrylate von Alkandiolen, wie z.B. Hydroxyethyl- und Hydroxypropyl(meth)acrylate und Butandiolmono(meth)acrylat, sowie Amid- und/oder Nitrilgruppen enthaltende Monomere, wie z.B. Acrylamid, Methacrylamid, Acrylnitril und/oder Methacrylnitril, geeignet.

Die Herstellung dieser Acrylatharze erfolgt nach dem Fachmann gut bekannten Polymerisationsverfahren, üblicherweise in Gegenwart eines organischen Lösemittels, Initiators und ggf. Reglers. Die Bedingungen sind dem Fachmann bekannt und brauchen daher nicht näher erläutert zu werden.

Selbstverständlich können auch im Handel erhältliche Acrylatharze als Bindemittel in den erfindungsgemäßen Aerosolbeschichtungszusammensetzungen eingesetzt werden, wie z.B. die im Handel unter den Namen Plexigum PM 381, Plexigum N742, Plexigum M825 und M345 der Firma Röhm sowie Paraloid B66 und B67 der Firma Rohm und Haas sowie Halwemer T241 und TN 4491 der Firma Hüttenes-Albertus erhältlichen Produkte.

In den erfindungsgemäßen Aerosolbeschichtungszusammensetzungen werden als Bindemittel bevorzugt auch thermoplastische, lufttrocknende Alkydharze eingesetzt. Zum Einsatz kommen dabei insbesondere mittelölige Alkydharze mit einem Ölgehalt von 40 bis 60 Gew.-% und/oder kurzölige Alkydharze mit einem Ölgehalt von weniger als 40 Gew.-%, bevorzugt mit einem Ölgehalt von 20 bis 30 Gew.-%. Unter Ölgehalt wird dabei der Anteil an Fettsäuren in Gew.-%, bezogen auf das Gewicht des Alkydharzes (Festharzanteil) verstanden.

Diese Alkydharze weisen üblicherweise Säurezahlen von 5 bis 30 mgKOH/g , OH-Zahlen von 100 bis 180 mgKOH/g und ein zahlenmittleres Molekulargewicht von 500 bis 3000, bevorzugt von 1200 bis 1800, auf. Die Jodzahlen liegen im allgemeinen zwischen 0,5 und 5 mgJ₂/g, bevorzugt zwischen 0,5 und 3 mgJ₂/g.

Diese Alkydharze werden nach den bekannten Methoden durch Umsetzung in der Schmelze oder in organischen Lösemitteln bei Temperaturen von im allgemeinen 200 bis 260 °C hergestellt.

Für die Herstellung der Alkydharze können die üblicherweise für die Herstellung von Alkydharzen eingesetzten Rohstoffe verwendet werden, wobei die Mengen der einzelnen Komponenten so zu wählen sind, daß die Alkydharze die gewünschten Kennzahlen aufweisen.

Bei den erfindungsgemäß eingesetzten Alkydharzen handelt es sich üblicherweise um Polykondensate aus aromatischen und/oder aliphatischen und/oder cycloaliphatischen Dicarbonsäuren und/oder Polycarbonsäuren, ggf. in Kombination mit Monocarbonsäuren, sowie aliphatischen und/oder cycloaliphatischen und/oder aromatischen Mono-, Di- und/oder Polyolen.

Insbesondere werden als Säurekomponente aromatische und/oder aliphatische und/oder cycloaliphatische Dicarbonsäuren zusammen mit aromatischen Dicarbonsäureanhydriden und/oder aromatischen Tricarbonsäureanhydriden und/oder aromatischen Tetracarbonsäureanhydriden und -dianhydriden eingesetzt.

Der Anteil an tri- und ggf. höherfunktionellen Aufbaukomponenten (Säure- und Alkoholkomponente) wird dabei so gewählt, daß die Alkydharze die gewünschten Molekulargewichte, OH-Zahlen und Säurezahlen aufweisen.

Bevorzugte carboxylgruppenhaltige Ausgangsverbindungen sind Terephthalsäure, Isophthalsäure, Dimethylterephthalat, o-Phthalsäure, o-Phthalsäureanhydrid, Trimellitsäure, Tetrahydrophthalsäure, Hexahydrophthalsäure, Trimellitsäureanhydrid, Adipinsäure, Sebazinsäure, Acelainsäure, Maleinsäure, Fumarsäure, Glutarsäure und längerkettige, aliphatische oder cycloaliphatische Dicarbonsäuren, wie beispielsweise 1,2-Cyclohexandicarbonsäure, 1,3-Cyclohexandicarbonsäure, 1,4-Cyclohexandicarbonsäure, 4-Methylhexahydrophthalsäure, Endomethylentetrahydrophthalsäure, Tricyclodecan-dicarbonsäure, Endoethylenhexahydrophthalsäure, Camphersäure, Cyclohexantetracarbonsäure, Cyclobutantetracarbonsäure und andere.

Die cycloaliphtatischen Polycarbonsäuren können sowohl in ihrer cis- als auch in ihrer trans-Form sowie als Gemisch beider Formen eingesetzt werden. Geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen oder Hydroxyalkoholen mit 1 bis 4 C-Atomen. Außerdem können auch die Anhydride der obengenannten Säuren oder Dodecenylbernsteinsäureanhydrid o.ä. Anhydride eingesetzt werden, sofern sie existieren.

Beispiele für Monocarbonsäuren, die gegebenenfalls zusammen mit den Polycarbonsäuren eingesetzt werden können, sind Benzoesäure, tert.-Butylbenzoesäure, Laurinsäure und Isononansäure.

Bevorzugte hydroxylgruppenhaltige Ausgangsverbindungen sind Di- und Triole, ggf. in Kombination mit Monolen und/oder höherwertigen Polyolen, wie beispielsweise Ethylenglykol, Propylenglykol-1,2 und -1,3, Butandiole, Petandiole, 2,2-Dimethyl-1,3-propandiol, 2-Ethyl-2-butylpropandiol-1,3, Diethylenglykol, Dipropylenglykol, Hexandiole, 2-Methylpentandiol, 2-Ethylbutandiol-1,4, Dimethylolcyclohexan, Glycerin, Trimethylolethan, Trimethylolpropan, Trimethylolbutan, Pentaerythrit, Dipentaerythrit, Polycaprolactondiole und -triole sowie die unter dem Namen Dianole der Firma Akzo im Handel erhältlichen Produkte u.a..

Ferner können als Diole auch aromatische oder alkylaromatische Diole eingesetzt werden, wie z. B. 2-Alkyl-2-phenyl-propan-1,3-diol, Bisphenol-Derivate mit Etherfunktionalität usw.

Als weitere Diole sind auch Ester von Hydroxycarbonsäuren mit Diolen geeignet, wobei als Diol die voranstehend genannten Diole eingesetzt werden können. Beispiele für Hydroxycarbonsäuren sind Hydroxypivalinsäure oder Dimethylolpropansäure.

Als Fettsäurekomponente zur Herstellung der Alkydharze können gesättigte und/oder ungesättigte Fettsäuren sowie deren Mischungen eingesetzt werden. Als Fettsäuren können beispielsweise Fettsäuren vom Sojaöl-Typ oder andere trocknende Öle, z.B. Tungöl, Tallöl, Leinsamenöl, Rhizinusöl, Chinaholzöl u.ä. eingesetzt werden. Die Fettsäuren können auch in Form ihrer Glyceride eingesetzt werden. Ferner können auch hydrierte Fettsäuren natürlich vorkommender Öle, bevorzugt Isononansäure, eingesetzt werden.

Ferner können auch die unter dem Begriff "Dimerfettsäuren" bekannten Carbonsäuren eingesetzt werden. Handelsübliche Dimerfettsäuren enthalten i.a. mindestens 80 Gew.-% Dimerfettsäure und bis maximal 20 Gew.-% Trimere und bis zu maximal 1 Gew.-% Monomere der entsprechenden Fettsäuren.

Selbstverständlich können auch im Handel erhältliche Alkydharze als Bindemittel in den erfindungsgemäßen Aerosolbeschichtungszusammensetzungen eingesetzt werden, wie z.B. die im Handel unter den Namen Alkydal E41, F26 und F251 und Desmophen® RD 181 der Firma Bayer AG, Alftalat AF 342, AR 300 und AR 351 der Firma Hoechst AG und Heso-Alkyd 60R der Firma Hendrichs Sommer erhältlichen Produkte.

Bevorzugt enthalten die erfindungsgemäßen Aerosolbeschichtungszusammensetzungen als Modifizierungsmittel mindestens ein Epoxidharz. Die Menge an eingesetzten Epoxidharzen kann je nach Aerosolbeschichtungszusammensetzung variieren. Bevorzugt wird das bzw. werden die Epoxidharze aber in einer Menge von 10 bis 140 Gew.-%, besonders bevorzugt von 40 bis 120 Gew.-%, jeweils bezogen auf das Gewicht des verwendeten chlorierten Polyolefins (Festkörpergehalt), eingesetzt.

Für den Einsatz in den erfindungsgemäßen Aerosolbeschichtungszusammensetzungen sind insbesondere Epoxidharze geeignet, die auf Bisphenol A basieren. Bevorzugt weisen die in diesen Aerosolbeschichtungszusammensetzungen eingesetzten Epoxidharze ein Epoxidäquivalentgewicht von 150 bis 500 , besonders bevorzugt von 170 bis 270, auf.

Ferner können auch die im Handel beispielsweise unter den Namen Epikote ®, wie Epikote ® 828 und 834, der Firma Shell, Araldit ®, wie Araldit ® GY 260, der Firma Ciba-Geigy und Epoxidharz flüssig, chlorarm der Firma Dow erhältlichen Produkte eingesetzt werden.

Bevorzugt enthalten die erfindungsgemäßen Aerosolbeschichtungszusammensetzungen außerdem mindestens einen Weichmacher und/oder Nitrocellulose. Die Menge an eingesetzten Weichmachern und/oder Nitrocellulose kann je nach Aerosolbeschichtungszusammensetzung variieren. Bevorzugt wird die Nitrocellulose aber in einer Menge von 0,5 bis 10 Gew.-%, besonders bevorzugt von 1 bis 8 Gew.-%, und der Weichmacher bevorzugt in einer Menge von 0,1 bis 5,0 Gew.-%, besonders bevorzugt von 0,2 bis 2,0 Gew.-%, jeweils bezogen auf das Gesamtgewicht der Aerosolbeschichtungszusammensetzung, eingesetzt.

Für den Einsatz in den erfindungsgemäßen Aerosolbeschichtungszusammensetzungen sind alle üblicherweise eingesetzten Nitrocellulosen geeignet. Bevorzugt werden aber esterlösliche Nitrocellulosen eingesetzt. Zum Einsatz kommen besonders bevorzugt Nitocellulosen vom Normtyp nach DIN 53179 von 9E bis 27E, ganz besonders bevorzugt vom Normtyp 24E bis 27E.

Für den Einsatz in den erfindungsgemäßen Aerosolbeschichtungszusammensetzungen sind beispielsweise auch die im Handel unter den Markennamen Wolle H24 und H27 der Firma Hagedorn AG, Wolle E 24 und E27 der Firma WNC-Nitochemie und Wolle E400 und E510 der Firma Wolff Walsrode AG erhältlichen Produkte geeignet.

Besonders bevorzugt werden in den erfindungsgemäßen Aerosolbeschichtungszusammensetzungen Kombinationen von Nitrocellulose der obengenannten Typen und lufttrocknendem Acrylatharz der obengenannten Art eingesetzt, die den Vorteil von guten Fließeigenschaften, Standfestigkeit, Glanz und Blockfestigkeit der resultierenden Aeosolbeschichtungszusammensetzungen bzw. Beschichtungen zur Folge haben.

Ebenfalls besonders bevorzugt werden in den erfindungsgemäßen Aerosolbeschichtungszusammensetzungen Kombinationen von Nitrocellulose der obengenannten Typen und lufttrocknendem Alkydharz der obengenannten Art eingesetzt, die den Vorteil von schneller Trocknung, guter Lichtbeständigkeit und guter Haftung der resultierenden Aeosolbeschichtungszusammensetzungen bzw. Beschichtungen zur Folge haben.

Als Weichmacher können ebenfalls alle üblicherweise eingesetzten Weichmacher, z.B. epoxidierte Fettsäuren, wie z.B. Edenol D81 der Firma Henkel, und/oder Phthalsäureweichmacher, wie z.B. Palatinol A und C der Firma BASF AG und Santicizer 160, 261 und 213 der Firma Monsanto, eingesetzt werden.

Bevorzugt enthalten die erfindungsgemäßen Aerosolbeschichtungszusammensetzungen mindestens ein Treibmittel. Bevorzugt wird das Treibmittel in einer solchen Menge eingesetzt, daß das Mischungsverhältnis von Beschichtungszusammensetzung ohne Treibmittel zu Treibmittel zwischen 80 Gew.-Teilen Beschichtungsmittel (ohne Treibmittel) : 20 Gew.-Teilen Treibmittel und 20 Gew.-Teilen Beschichtungsmittel (ohne Treibmittel) : 80 Gew.-Teilen Treibmittel, bevorzugt zwischen 80 Gew.-Teilen Beschichtungsmittel : 20 Gew.-Teilen Treibmittel und 45 Gew.-Teilen Beschichtungsmittel : 55 Gew.-Teilen Treibmittel beträgt.

Bevorzugt enthält die Aerosolbeschichtungszusammensetzung als Treibmittel einen oder mehrere Kohlenwasserstoffe, Stickstoff, Kohlendioxid, komprimierte Luft oder Stickoxid, ggf. zusammen mit anderen Treibmitteln. Besonders bevorzugt enthält sie als Treibmittel zumindest teilweise eine Mischung von Propan und Butan, bevorzugt im Mischungsverhältnis von 20 Gewichtsteilen Propan : 80 Gewichtsteilen Butan bis 60 Gewichtsteilen Propan : 40 Gewichtsteilen Butan.

Die erfindungsgemäße Aerosolbeschichtungszusammensetzung kann zusätzlich zu dem Gemisch aus Propan und Butan oder statt des Gemisches noch ein oder mehrere andere Treibmittel enthalten. Werden zusätzliche Treibmittel eingesetzt, so werden sie üblicherweise in einer Menge von 0 bis 80 Gew.-%, bezogen auf das Gewicht des als Treibmittel eingesetzten Gemisches aus Propan und Butan, eingesetzt.

Als andere Treibmittel können beispielsweise allgemein bekannte Fluorkohlenwasserstoffe (FCKW oder HFCKW), wie z.B. Dichlordifluormethan, Trichlorfluormethan, Chlordifluormethan, 1,1-Difluorethan, 1,1,1-Chlordifluorethan oder 1,2-Dichlortetrafluorethan, eingesetzt werden. Geeignet ist auch Dimethylether.

Die Aerosolbeschichtungszusammensetzungen können als weiteren Bestandteil alle lacküblichen Pigmente in Anteilen von 0 bis 30 Gew.-%, bezogen auf das Gesamtgewicht der Aerosolbeschichtungszusammensetzung, enthalten. Die Pigmente können aus anorganischen oder organischen Verbindungen bestehen und können effekt- und/oder farbgebend sein.

Als Effektpigmente können Metallplättchenpigmente, wie handelsübliche Aluminiumbronzen, gemäß DE-A-36 36 183 chromatierte Aluminiumbronzen und handelsübliche Edelstahlbronzen, sowie nicht metallische Effektpigmente, wie zum Beispiel Perlglanz- bzw. Interferenzpigmente, eingesetzt werden. Beispiele für geeignete anorganische farbgebende Pigmente sind Titandioxid, Eisenoxide, Sicotransgelb und Ruß. Beispiele für geeignete organische farbgebende Pigmente sind Indanthrenblau, Cromophthalrot, Irgazinorange und Heliogengrün.

Als weiteren Bestandteil enthalten die Aerosolbeschichtungszusammensetzungen mindestens ein organisches Lösemittel. Beispiele für geeignete Lösemittel sind die schon bei der Herstellung der Bindemittel genannten Verbindungen (siehe oben). Weiterhin geeignet sind Ester, Ketone, Ketoester, Glykoletherester und Glykolether, z.B. Ethylenglykol sowie 1, 2- und 1, 3-Propylenglykol.

Die Lösemittel werden üblicherweise in einer Menge von 40 bis 70 Gew.-%, bevorzugt von weniger als 65 Gew.-%, bezogen auf das Gesamtgewicht der Aerosolbeschichtungszusammensetzungen, eingesetzt.

Als weiteren Bestandteil können die Aerosolbeschichtungszusammensetzungen mindestens ein rheologiesteuerndes Additiv enthalten. Als Beispiele für rheologiesteuernde Additive werden genannt: vernetzte polymere Mikroteilchen, wie sie beispielsweise in der EP-A-38 127 offenbart sind, anorganische Schichtsilikate, wie z.B. Aluminium-Magnesium-Silikate, Natrium-Magnesium-Schichtsilikate und Natrium-Magnesium-Fluor-Lithium-Schichtsilikate des Montmorillonit-Typs, sowie synthetische Polymere mit ionischen und/oder assoziativ wirkenden Gruppen, wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder auch hydrophob modifizierte ethoxylierte Urethane oder Polyacrylate. Bevorzugt werden als rheologiesteuernde Additive Polyurethane eingesetzt. Bevorzugt enthält die Aerosolbeschichtungszusammensetzung 0 bis 2 Gew.-% des rheologiesteuernden Additivs, bezogen auf das Gesamtgewicht der Aerosolbeschichtungszusammensetzungen.

Die Aerosolbeschichtungszusammensetzungen können außerdem mindestens noch ein weiteres übliches Lackadditiv enthalten. Beispiele für derartige Additive sind Entschäumer und Verlaufshilfsmittel, wie z.B. Byk 300, 301 und 320 der Firma Byk-Chemie, Baysilone-Öl A, OL und PL der Firma Bayer sowie PA 11 und PA 14 der Firma Dow Corning und Silikonöl AL der Firma Wacker-Chemie.

Die Herstellung der Aerosolbeschichtungszusammensetzungen erfolgt nach dem Fachmann bekannten Verfahren. Üblicherweise wird dabei zunächst aus mindestens einem filmbildenden Polymer, organischem Lösemittel, ggf. Pigmenten und/oder Füllstoffen, ggf. Modifizierungsmittel sowie ggf. üblichen Hilfs- und Zusatzstoffen durch Rühren und ggf. Dispergieren eine Beschichtungszusammensetzung hergestellt, die anschließend mit dem oder den Treibmitteln versetzt wird. Es ist aber auch möglich, zunächst die Beschichtungszusammensetzung ohne Treibmittel herzustellen und das Treibmittel erst kurz vor Applikation der Aerosolbeschichtungszusammensetzung zuzumischen. So ist beispielsweise auch die Verwendung von Zweikammerdüsen möglich, bei denen das Treibmittel und die Beschichtungszusammensetzung in getrennten Kammern der Dose aufbewahrt werden und das Treibmittel als Druckgas die Beschichtungszusammensetzung austreibt.

Die erfindungsgemäßen Aerosolbeschichtungszusammensetzungen sind insbesondere geeignet für die Beschichtung von Kunststoffteilen, bevorzugt für die Beschichtung von Kunststoffteilen, die entweder aus Polypropylen bestehen oder die einen Polypropylengehalt aufweisen (sogenannte Polypropylenblends). Derartige Polypropylenblends weisen bevorzugt einen Gehalt von 40 bis 100 Gew.-% Polypropylen und von 0 bis 60 Gew.-% beliebiger anderer Polymerer auf, wie sie z.B. zur Herstellung von Polypropylen enthaltenden Kunststoffsubstraten üblicherweise eingesetzt werden. Besonders bevorzugt werden sie zur Beschichtung von Polypropylen- oder Ethylen-Propylen-Dien-(PP/EPDM)-Substraten eingesetzt.

Daneben können die erfindungsgemäßen Beschichtungsmittel selbstverständlich auch auf andere Kunststoffsubstrate, wie beispielsweise ABS, AMMA, ASA, CA, CAB, EP, UF, CF, MF, MPF, PF, PAN, PA, PC, PE, HDPE, LDPE, LLDPE,UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) aufgebracht werden. Die zu lackierenden Kunststoffe können selbstverständlich auch Polymerblends, modifizierte Kunststoffe oder faserverstärkte Kunststoffe sein.

Schließlich können die Beschichtungsmittel auch auf andere Substrate, wie beispielsweise Metall, Holz oder Papier, appliziert werden.

Besonders geeignet ist die erfindungsgemäße Aerosolbeschichtungszusammensetzung zur Beschichtung von Kraftfahrzeugteilen aus den o.g. Kunststoffen, wie z.B. Stoßfängerverkleidungen, Spoiler, Schweller, Radhausverkleidungen und seitliche Verkleidungen bzw. Schutzleisten.

Aufgrund der guten Haftung der erfindungsgemäßen Aerosolbeschichtungszusammensetzungen auf den Kunststoffsubstraten ist eine Grundierung bzw. Vorlackierung vor Applikation der Aerosolbeschichtungszusammensetzungen nicht erforderlich, eine übliche Grundierung/Vorlackierung der Kunststoffsubstrate stört aber auch nicht.

Die erfindungsgemäßen Aerosolbeschichtungszusammensetzungen können ferner auch ohne Vorbehandlung der Kunststoffsubstrate, also beispielsweise ohne Beflammen, Corona- oder Plasma-Behandlung auf das Kunststoffsubstrat aufgebracht werden. Eine entsprechende Vorbehandlung stört aber auch nicht.

Gegenstand der vorliegenden Erfindung ist daher auch ein Verfahren zur Beschichtung von Kunststoffsubstraten, das dadurch gekennzeichnet, daß
1. eine erfindungsgemäße Aerosolbeschichtungszusammensetzung aufgebracht wird und
2. die Aerosolbeschichtungszusammensetzung direkt ohne vorherige Grundierung auf das Kunststoffsubstrat aufgebracht wird.

Die erfindungsgemäßen Aerosolbeschichtungszusammensetzungen kommen dabei insbesondere in Form von Aerosol-Grundierungen, -Decklacken und -Einschichtlacken zum Einsatz. Die erfindungsgemäßen Beschichtungsmittel stellen lufttrocknende Systeme dar und werden daher üblicherweise bei Umgebungstemperatur oder leicht erhöhten Temperaturen von i.a. weniger als 80 °C gehärtet.

Die Erfindung wird nun anhand von Ausführungsbeispielen näher erläutert. Alle Angaben über Teile und Prozente sind dabei Gewichtsangaben, sofern nicht ausdrücklich etwas anderes festgestellt wird.

### Beispiel 1

11,5 Teile eines handelsüblichen, kurzöligen Alkydharzes auf Basis von gesättigten Fettsäuren mit einem Ölgehalt von 23 %, einem Phthalsäureanhydridanteil von 22 %, einer OH-Zahl (lösemittelfrei) von 140 mgKOH/g, einer Säurezahl (lösemittelfrei) < 10 mgKOH/g und einer Viskosität (50 %ig in Xylol) von 35 bis 40 s (nach DIN 53 211),
3,0 Teile Methoxypropanol,
2,2 Teile Butanol,
0,295 Teile eines handelsüblichen Weichmachers auf Basis epoxidiertes Sojaöl
   und
0,6 Teile Rußpigment
   werden vordispergiert und anschließend auf eine Hegman-Feinheit von 8 Mikrometern gemahlen. Diese Mischung wird unter Rühren mit einer Mischung aus
7,2 Teilen einer handelsüblichen, esterlöslichen Nitrocellulose (Normtyp 24 E),
7,2 Teilen Butylacetat,
1,5 Teilen einer handelsüblichen, 25 %igen Lösung in Xylol eines chlorierten Polyolefins mit einem Chlorgehalt von 18 Gew.-%, bezogen auf den Festkörper des chlorierten Polyolefins,
0,5 Teilen eines handelsüblichen Epoxidharzes auf Basis Bisphenol A mit einem Epoxidäquivalentgewicht von 230 bis 270 und mit einem zahlenmittleren Molekulargewicht von 470,
0,005 Teilen eines handelsüblichen, silikonhaltigen Verlaufsmittels
   und
33 Teilen Aceton als Lösevermittler
   versetzt und zu einer homogenen Mischung verarbeitet. Die so erhaltene Beschichtungzusammensetzung wird in Sprühdosen abgefüllt und mit 33 Teilen einer Mischung aus 30 Teilen Propan und 70 Teilen Butan versetzt.

Die so erhaltene Aerosolbeschichtungszusammensetzung 1 weist eine sehr gute Lagerstabilität in der Sprühdose auf. Sowohl nach Lagerung von 12 Monaten bei 50 °C als auch nach Lagerung von 12 Monaten bei Umgebungstemperatur in der Sprühdüse traten keine Veränderungen der Aerosolbeschichtungszusammensetzung auf.

Die Aerosolbeschichtungszusammensetzung 1 zeigte ferner eine gute Applizierbarkeit aus der Sprühdose. Sie konnte fein versprüht werden, zeigte eine gute Standfestigkeit, eine gute Kantenabdeckung des Untergrundes, einen guten Verlauf, eine schnelle Trocknung und eine gleichmäßige Beschichtung. Außerdem konnte sie ohne Schaumblasen appliziert werden.

Zur Prüfung der weiteren Eigenschaften wurde die Aerosolbeschichtungszusammensetzung 1 außerdem auf ein nicht vorbehandeltes Kunststoffteil aus PP/EPDM in einer Schichtdicke von 25 bis 30 Mikrometern appliziert. Die Beschichtung war staubtrocken nach ca. 30 min und durchgetrocknet nach 24 h bei Raumtemperatur. Die resultierende Beschichtung wurde 7 Tage bei Raumtemperatur gelagert. Danach wurde die Haftung nach DIN 53151 geprüft und der sehr gute Wert Gt 0 festgestellt.

### Beispiel 2

2,0 Teile eines handelsüblichen, nichtvernetzenden thermoplastischen Polymethacrylates (Basis Butylmethacrylat und Methylmethacrylat) mit einer Temperatur T_{^max} von 82 °C, einem zahlenmittleren Molekulargewicht von 70.000, einer Säurezahl von 7 - 9 mgKOH/g und einer Jodfarbzahl unter 1,
8,4 Teile Xylol,
1,4 Teile Butylacetat 98-100,
1,0 Teile eines handelsüblichen Weichmachers auf Basis Benzylbutylphthalat,
3,6 Teile einer Mischung aus 1,3 Teilen Xylol, 0,8 Teilen Butylacetat 98-100 und 1,5 Teilen einer handelsüblichen, esterlöslichen Nitrocellulose (Normtyp 24 E),
0,4 Teile Butanol,
2,2 Teile Methylisobutylketon,
0,3 Teile 1-Methoxypropylacetat-2,
3,8 Teile einer handelsüblichen Aluminiumpaste,
1,5 Teile einer handelsüblichen, 25 %igen Lösung in Xylol eines chlorierten Polyolefins mit einem Chlorgehalt von 18 Gew.-%, bezogen auf den Festkörper des chlorierten Polyolefins,
0,5 Teile eines handelsüblichen Epoxidharzes auf Basis Bisphenol A mit einem Epoxidäquivalentgewicht von 230 bis 270 und mit einem zahlenmittleren Molekulargewicht von 470 und
45,90 Teile Aceton als Lösevermittler
   werden mit einem Rührer zu einer homogenen Mischung verarbeitet. Die so erhaltene Beschichtungzusammensetzung wird in Sprühdosen abgefüllt und mit 29,0 Teilen einer Mischung aus 30 Teilen Propan und 70 Teilen Butan versetzt.

Die so erhaltene Aerosolbeschichtungszusammensetzung 2 weist eine sehr gute Lagerstabilität in der Sprühdose auf. Sowohl nach Lagerung von 12 Monaten bei 50 °C als auch nach Lagerung von 12 Monaten bei Umgebungstemperatur in der Sprühdüse traten keine Veränderungen der Aerosolbeschichtungszusammensetzung auf.

Die Aerosolbeschichtungszusammensetzung 2 zeigte ferner eine gute Applizierbarkeit aus der Sprühdose. Sie konnte fein versprüht werden, zeigte eine gute Standfestigkeit, eine gute Kantenabdeckung des Untergrundes, einen guten Verlauf, eine schnelle Trocknung und eine gleichmäßige Beschichtung. Außerdem konnte sie ohne Schaumblasen appliziert werden.

Zur Prüfung der weiteren Eigenschaften wurde die Aerosolbeschichtungszusammensetzung 2 außerdem auf ein nicht vorbehandeltes Kunststoffteil aus PP/EPDM in einer Schichtdicke von 25 bis 30 Mikrometern appliziert. Die Beschichtung war staubtrocken nach ca. 20 min und durchgetrocknet nach 24 h bei Raumtemperatur. Die resultierende Beschichtung wurde 7 Tage bei Raumtemperatur gelagert. Danach wurde die Haftung nach DIN 53151 geprüft und der sehr gute Wert Gt 0 festgestellt.

### Beispiel 3

10,0 Teile eines handelsüblichen, nichtvernetzenden thermoplastischen Polymethacrylates (Basis Butylmethacrylat und Methylmethacrylat) mit einer Temperatur T_{^max} von 82 °C, einem zahlenmittleren Molekulargewicht von 70.000, einer Säurezahl von 7 - 9 mgKOH/g und einer Jodfarbzahl unter 1
   werden in 10,0 Teilen Xylol gelöst. Dann werden
3,7 Teile Titandioxid vom Rutiltyp,
1,3 Teile Magnesiumsilikat,
4,8 Teile Calciumcarbonat,
0,65 Teile Butylglykol und
0,65 Teile 1-Methoxypropylacetat-2
   zugegeben und vordispergiert und anschließend auf eine Hegman-Feinheit von < 12 Mikrometern gemahlen. Diese Mischung wird unter Rühren mit einer Mischung aus
1,4 Teilen eines handelsüblichen Weichmachers auf Basis Benzylbutylphthalat,
0,4 Teilen Isobutanol,
5,448 Teilen Xylol,
1,95 Teilen einer handelsüblichen, 25 %igen Lösung in Xylol eines chlorierten Polyolefins mit einem Chlorgehalt von 30 Gew.-%, bezogen auf den Festkörper des chlorierten Polyolefins,
0,7 Teilen eines handelsüblichen Epoxidharzes auf Basis Bisphenol A mit einem Epoxidäquivalentgewicht von 230 bis 270 und mit einem zahlenmittleren Molekulargewicht von 470,
0,002 Teilen eines handelsüblichen, silikonhaltigen Verlaufsmittels
   und
36 Teilen Aceton als Lösevermittler
   versetzt und zu einer homogenen Mischung verarbeitet. Die so erhaltene Beschichtungzusammensetzung wird in Sprühdosen abgefüllt und mit 23 Teilen einer Mischung aus 30 Teilen Propan und 70 Teilen Butan versetzt.

Die so erhaltene Aerosolbeschichtungszusammensetzung 3 weist eine sehr gute Lagerstabilität in der Sprühdose auf. Sowohl nach Lagerung von 12 Monaten bei 50 °C als auch nach Lagerung von 12 Monaten bei Umgebungstemperatur in der Sprühdüse traten keine veränderungen der Aerosolbeschichtungszusammensetzung auf.

Die Aerosolbeschichtungszusammensetzung 3 zeigte ferner eine gute Applizierbarkeit aus der Sprühdose. Sie konnte fein versprüht werden, zeigte eine gute Standfestigkeit, eine gute Kantenabdeckung des Untergrundes, einen guten Verlauf, eine schnelle Trocknung und eine gleichmäßige Beschichtung. Außerdem konnte sie ohne Schaumblasen appliziert werden.

Zur Prüfung der weiteren Eigenschaften wurde die Aerosolbeschichtungszusammensetzung 3 außerdem auf ein nicht vorbehandeltes Kunststoffteil aus PP/EPDM in einer Schichtdicke von 25 bis 30 Mikrometern appliziert. Die Beschichtung war staubtrocken nach ca. 15 min und durchgetrocknet nach 24 h bei Raumtemperatur. Die resultierende Beschichtung wurde 7 Tage bei Raumtemperatur gelagert. Danach wurde die Haftung nach DIN 53151 geprüft und der sehr gute Wert Gt 0 festgestellt.

## Patentansprüche

1. Aerosolbeschichtungszusammensetzung, die mindestens ein filmbildendes Polymer, organisches Lösemittel, mindestens ein Treibmittel, ggf. Pigmente und/oder Füllstoffe, ggf. Modifizierungsmittel sowie ggf. übliche Hilfs- und Zusatzstoffe enthält, dadurch gekennzeichnet, daß sie ein oder mehrere chlorierte Polyolefine enthält.

2. Aerosolbeschichtungszusammensetzung nach Anspruch 1, dadurch gekennzeichnet, daß die chlorierten Polyolefine einen Chlorgehalt von 10 bis 45 Gew.-%, bevorzugt von 10 bis 25 Gew.-%, bezogen auf den Festkörper der chlorierten Polyolefine, und/oder ein zahlenmittleres Molekulargewicht von 7.000 bis 200.000, bevorzugt von 8.000 bis 50.000, aufweisen.

3. Aerosolbeschichtungszusammensetzung nach Anspruch 1 oder 2, dadurch gekennzeichnet, daß sie 0,05 bis 15 Gew.-%, bevorzugt 0,1 bis 10 Gew.-%, und ganz besonders bevorzugt 0,2 bis 5,0 Gew.-%, jeweils bezogen auf das Gesamtgewicht der Aerosolbeschichtungszusammensetzung, des oder der chlorierten Polyolefine enthält.

4. Aerosolbeschichtungszusammensetzung nach einem der Ansprüche 1 bis 3, dadurch gekennzeichnet, daß sie als Modifizierungsmittel mindestens ein Epoxidharz enthält.

5. Aerosolbeschichtungszusammensetzung nach Anspruch 4, dadurch gekennzeichnet, daß sie 10 bis 140 Gew.-%, bevorzugt 40 bis 120 Gew.-%, jeweils bezogen auf das Gewicht der eingesetzten chlorierten Polyolefine, des oder der Epoxidharze enthält.

6. Aerosolbeschichtungszusammensetzung nach einem der Ansprüche 1 bis 5, dadurch gekennzeichnet, daß sie als Treibmittel einen oder mehrere Kohlenwasserstoffe, Stickstoff, Kohlendioxid, komprimierte Luft oder Stickoxid, ggf. zusammen mit anderen Treibmitteln, enthält.

7. Aerosolbeschichtungszusammensetzung nach einem der Ansprüche 1 bis 6, dadurch gekennzeichnet, daß sie als Treibmittel zumindest teilweise eine Mischung von Propan und Butan, bevorzugt im Mischungsverhältnis von 20 Gewichtsteilen Propan : 80 Gewichtsteilen Butan bis 60 Gewichtsteilen Propan : 40 Gewichtsteilen Butan enthält.

8. Aerosolbeschichtungszusammensetzung nach einem der Ansprüche 1 bis 7, dadurch gekennzeichnet, daß der Gehalt an Treibmittel so gewählt wird, daß das Mischungsverhältnis von Beschichtungszusammensetzung ohne Treibmittel zu Treibmittel zwischen 80 Gew.-Teilen zu 20 Gew.-Teilen und 20 Gew.-Teilen zu 80 Gew.-%, bevorzugt zwischen 80 Gew.-Teilen zu 20 Gew.-Teilen und 45 Gew.-Teilen zu 55 Gew.-Teilen beträgt.

9. Aerosolbeschichtungszusammensetzung nach einem der Ansprüche 1 bis 8, dadurch gekennzeichnet, daß sie als Bindemittel thermoplastische, lufttrocknende Acrylatharze und/oder thermoplastische, lufttrocknende Alkydharze enthält.

10. Aerosolbeschichtungszusammensetzung nach einem der Ansprüche 1 bis 9, dadurch gekennzeichnet, daß sie zusätzlich Nitrocellulose und/oder einen oder mehrere Weichmacher enthält.

11. Verfahren zur Herstellung von Aerosolbeschichtungszusammensetzungen nach einem der Ansprüche 1 bis 10, dadurch gekennzeichnet, daß zunächst aus mindestens einem filmbildenden Polymer, organischem Lösemittel, ggf. Pigmenten und/oder Füllstoffen, ggf. Modifizierungsmittel sowie ggf. üblichen Hilfs- und Zusatzstoffen durch Rühren und ggf. Dispergieren eine Beschichtungszusammensetzung hergestellt wird, die anschließend mit dem oder den Treibmitteln versetzt wird.

12. Verfahren nach Anspruch 11, dadurch gekennzeichnet, daß die Beschichtungszusammensetzung ohne Treibmittel und das Treibmittel erst kurz vor der Applikation der Aerosolbeschichtungszusammensetzung gemischt werden.

13. Verfahren zur Beschichtung von Kunststoffsubstraten mit Aerosolbeschichtungszusammensetzungen, dadurch gekennzeichnet, daß
1. eine Aerosolbeschichtungszusammensetzung nach einem der Ansprüche 1 bis 10 aufgebracht wird und
2. die Aerosolbeschichtungszusammensetzung direkt ohne vorherige Grundierung auf das Kunststoffsubstrat aufgebracht wird.

14. Verfahren nach Anspruch 13, dadurch gekennzeichnet, daß es zur Beschichtung von aus Polypropylen bestehenden oder Polypropylen enthaltenden Kunststoffen, besonders bevorzugt Kunststoffen mit einem Polypropylengehalt von mindestens 40 Gew.-%, ganz besonders bevorzugt zur Beschichtung von Polypropylen oder Ethylen-Propylen-Dien-Substraten eingesetzt wird.

15. Verfahren nach Anspruch 13 oder 14, dadurch gekennzeichnet, daß es zur Beschichtung von Kraftfahrzeugteilen eingesetzt wird.
